Europäisches Patentamt

European Patent Office

Office européen des brevets

(19)

(11) **EP 1 315 393 A1**

(12) **EUROPÄISCHE PATENTANMELDUNG**

(43) Veröffentlichungstag:
    **28.05.2003 Patentblatt 2003/22**

(51) Int Cl.⁷: **H04Q 7/38**

(21) Anmeldenummer: **02360308.7**

(22) Anmeldetag: **12.11.2002**

(84) Benannte Vertragsstaaten:
    **AT BE BG CH CY CZ DE DK EE ES FI FR GB GR
    IE IT LI LU MC NL PT SE SK TR**
    Benannte Erstreckungsstaaten:
    **AL LT LV MK RO SI**

(30) Priorität: **27.11.2001 DE 10157941**

(71) Anmelder: **ALCATEL**
    **75008 Paris (FR)**

(72) Erfinder:
    • **Nikolai, Dirk, Dr.**
      **70439 Stuttgart (DE)**
    • **Wenning, Bernd-Ludwig**
      **28219 Bremen (DE)**

(74) Vertreter: **Schultenkämper, Johannes et al
    Alcatel,
    Intellectual Property Department,
    Stuttgart
    70430 Stuttgart (DE)**

(54) **Verfahren zur Positionsbestimmung einer Mobilstation auf der Basis von Ausbreitungsmodellen**

(57) Bei einem Verfahren zur Positionsschätzung einer Mobilstation (2) in einem Mobilfunknetz (1) auf der Basis von Ausbreitungsmodellen, wird an der Mobilstation (2) die Feldstärke von mehreren mit der Mobilstation (2) in Verbindung stehenden Basisstationen (6 - 8) gemessen, die Entfernung zwischen der Mobilstation (2) und jeder der mit der Mobilstation (2) in Verbindung stehenden Basisstationen (6 - 8) aufgrund eines Aus- breitungsmodells geschätzt und werden die geschätz- ten Entfernungen gespeichert, wobei eine Filterung der geschätzten Entfernungen und eine Schätzung der Position der Mobilstation (2) aufgrund der gefilterten ge- schätzten Entfernungen erfolgt. Bei einer Weiterbildung kann das verwendete Ausbreitungsmodell auf Grund der gemessenen Feldstärken angepasst werden. Da- durch kann eine genauere Positionsbestimmung der Mobilstation (2) erfolgen.

**Fig. 1b**

EP 1 315 393 A1

**Beschreibung**

Die Erfindung betrifft ein Verfahren zur Positionsbestimmung einer Mobilstation auf der Basis von Ausbreitungsmodellen, bei dem an der Mobilstation die Feldstärke von mehreren mit der Mobilstation in Verbindung stehenden Basisstationen gemessen wird, die Entfernung zwischen der Mobilstation und jeder der mit der Mobilstation in Verbindung stehenden Basisstationen aufgrund eines Ausbreitungsmodells geschätzt und die geschätzten Entfernungen gespeichert werden.

Die Bestimmung der Position einer Mobilstation (mobile station) eines Mobilfunknetzes (mobile radio network) und damit der Aufenthalt des Benutzers der Mobilstation kann durch verschiedene standardisierte Verfahren, wie z.B. Zell-Identität, Laufzeitmessung, GPS-unterstützt etc. erfolgen. Mit den verschiedenen Verfahren sind grundsätzlich unterschiedliche Genauigkeiten der Positionsbestimmung zu erzielen. Die Genauigkeiten können von einer geeigneten Vor- oder Nachbehandlung der ermittelten Werte sowie von der aktuellen Funkkanalsituation abhängen.

Wird die Position aufgrund von Feldstärkemessungen bestimmt, so wird an der Mobilstation die Feldstärke eines von einer Basisstation (base station) abgestrahlten Funksignals gemessen. Die an einer Mobilstation gemessenen Feldstärken von beim GSM-System bis zu sieben Basisstationen werden in einem sogenannten Measurement Report in jeder Mobilstation zusammengefasst und an die Basisstation weiter geleitet. Der Measurement Report wird fortlaufend aktualisiert und bei Bedarf von der Basisstation an ein Ortungszentrum für Mobilstationen (mobile location center (MLC)) weiter geleitet. Unter Verwendung von Funk-Ausbreitungsmodellen wird die Entfernung d der Mobilstation zu den einzelnen Basisstationen geschätzt. Die Aufenthaltsposition der Mobilstation wird als diejenige Position geschätzt, die mit den geschätzten Entfernungen am besten übereinstimmt.

Als Beispiel für ein bekanntes Ausbreitungsmodell kann das Hata-Modell genannt werden. Gemäß dem Hata-Modell kann die Entfernung d aus der folgenden Gleichung geschätzt werden:

$$D = A + B \ (\log(d/km))$$

Wobei D die aus gemessener Empfangsleistung und bekannter Sendeleistung berechnete (Ausbreitungs-) Dämpfung ist. Hierbei werden für die Entfernungsschätzung mittlere Werte für die Grunddämpfung A und den Ausbreitungskoeffizient B der elektromagnetischen Wellen vorgegeben, die für jede Zelle um eine Basisstation oder jeden Zellsektor unterschiedlich sein können. Mittlere Werte für die Grunddämpfung A und den Ausbreitungskoeffizienten B sind den Mobilfunknetzbetreibern aus der Zellplanung bekannt.

Die momentane Dämpfung hängt von vielen Randbedingungen ab, wie z.B. Nah- oder Fernfeld, örtliche Bebauung, Wetter, ob sich die Mobilstation in einem Gebäude oder in einem Fahrzeug befindet, oder ob sie sich im Freien befindet. Insbesondere die hohe zusätzliche Grunddämpfung innerhalb von Gebäuden oder innerhalb von Fahrzeugen kann zu Fehlern bei der Entfernungsschätzung führen.

Aufgabe der vorliegenden Erfindung ist es daher, ein auf der Feldstärkemessung basierendes Verfahren zu entwickeln, mit dem die Genauigkeit der Positionsbestimmung erhöht werden kann.

Gelöst wird diese Aufgabe erfindungsgemäß durch ein Verfahren zur Positionsbestimmung einer Mobilstation in einem Mobilfunknetz auf der Basis von Ausbreitungsmodellen, bei dem eine Messung der Feldstärke an der Mobilstation von mehreren mit der Mobilstation in Verbindung stehenden Basisstationen, eine Schätzung der Entfernung zwischen der Mobilstation und jeder der mit der Mobilstation in Verbindung stehenden Basisstationen aufgrund eines Ausbreitungsmodells und Speicherung der geschätzten Entfernungen erfolgt, die geschätzten Entfernungen gefiltert werden und eine Schätzung der Position der Mobilstation aufgrund der gefilterten geschätzten Entfernungen erfolgt.

Durch die Filterung der geschätzten Entfernungen werden unrealistische geschätzte Entfernungen für die Positionsbestimmung weniger stark berücksichtigt. Dadurch kann der Fehler bei der Positionsbestimmung aufgrund von vom Mittelwert abweichenden Dämpfungen, z.B. wenn kurzzeitig starke Schwundeffekte auftreten, deutlich verringert werden.

Bei einer vorteilhaften Verfahrensvariante werden die geschätzten Entfernungen derart gefiltert, dass für jede Mobilstation-Basisstation-Verbindung zunächst die Abweichung der aktuellen geschätzten Entfernung zu der zuletzt geschätzten Entfernung bestimmt wird, eine zulässige maximale Abweichung definiert wird und die Positionsbestimmung mit aktuellen geschätzten Entfernungen erfolgt, für die die Abweichung geringer oder gleich der maximalen Abweichung ist. Durch diese Maßnahme wird die aktuell geschätzte Entfernung zu der zuletzt geschätzten Entfernung ins Verhältnis gesetzt und kann beurteilt werden, ob die aktuell geschätzte Entfernung realistisch ist.

Bei einer alternativen Verfahrensvariante werden die geschätzten Entfernungen derart gefiltert werden, dass für jede Mobilstation-Basisstation-Verbindung die geschätzten Entfernungen aus mehreren vorhergehenden Messungen gemittelt werden, die Abweichung der aktuellen geschätzten Entfernung zu der gemittelten geschätzten Entfernung bestimmt wird, eine maximale Abweichung definiert wird und die Positionsbestimmung mit aktuellen geschätzten Entfernungen erfolgt, für die die Abweichung geringer oder gleich der maximalen Abweichung ist. Durch die Mittelung der vorhergehenden geschätzten Entfernungen fallen vorhergehende Fehlschätzungen nicht so stark ins Gewicht beziehungsweise werden kompensiert. Durch den Vergleich der aktuell geschätzten Entfernung mit dem Mittelwert der vorhergehenden geschätzten Entfernungen kann daher eine zuverlässige Aussage über die Genauigkeit der aktuell geschätzten Entfernung getroffen werden.

Bei einer Weiterbildung des Verfahrens werden die geschätzten Entfernungen vorhergehender Messungen zeitlich gewichtet. Auf diese Art und Weise können beispielsweise jüngere geschätzte Entfernungen stärker berücksichtigt werden als ältere geschätzte Entfernungen. Es erfolgt also eine zeitliche Filterung der geschätzten Entfernungen. Es kann jedoch auch vorgesehen sein, alternativ oder zusätzlich die geschätzten Positionen der Mobilstation zeitlich zu filtern.

Eine weitere Verfahrensvariante liegt darin, dass eine geschätzte Position, die außerhalb einer aktuellen Zelle liegt, korrigiert wird, indem die geschätzte Position in den Bereich der Zelle verlegt wird. Eine Zelle ist definiert durch das von einer Basisstation abgedeckte Funkversorgungsgebiet. Beispielsweise kann vorgesehen sein, dass die Position der Mobilstation auf den Rand des Funkversorgungsgebiets gelegt wird. Dies setzt jedoch voraus, dass die räumlichen Dimensionen der Zelle, in der sich die Mobilstation gerade befindet, bekannt sind.

Bei einer besonders vorteilhaften Verfahrensvariante werden die Abweichungen der gefilterten geschätzten Entfernungen zur geschätzten Position bestimmt und wird aufgrund dieser Abweichungen die Grunddämpfung im Ausbreitungsmodell angepasst. Anschließend kann die Position der Mobilstation mit der angepassten Grunddämpfung erneut geschätzt werden. Dieser Vorgang kann wiederholt werden (Iteration). Unter Abweichung versteht man den kürzesten Abstand zwischen der geschätzten Position der Mobilstation und einer geschätzten Entfernung. Somit kann das verwendete Ausbreitungsmodell auf Grund der gemessenen Feldstärken angepasst werden. Die Genauigkeit der Positionsschätzung der Mobilstation kann dadurch im Vergleich zu Schätzungen auf der Basis von starren Ausbreitungsmodellen erheblich erhöht werden. Es versteht sich, dass eine besonders gute Anpassung des Ausbreitungsmodells erfolgen kann, wenn zur Positionsbestimmung gefilterte geschätzte Entfernungen verwendet werden. Es ist jedoch auch denkbar, die Position mit ungefilterten geschätzten Entfernungen zu schätzen und die Abweichung dieser Entfernungen zur geschätzten Position zu bestimmen. Außerdem kann das Verfahren genutzt werden, zwischen Mobilstationen bzw. Benutzern, die sich im Freien, in einem Fahrzeug oder in einem Gebäude befinden, zu unterscheiden. Mit der angepassten Grunddämpfung kann die Position auch für Mobilstationen, die sich in Gebäuden befinden, akkurat bestimmt werden.

Bei einer Weiterbildung wird die Grunddämpfung adaptiv angepasst. Dadurch kann eine noch bessere und schnelle Anpassung der Grunddämpfung erfolgen, so dass die Position der Mobilstation immer so genau wie möglich bestimmt werden kann.

Bei einer vorteilhaften Ausgestaltung des erfindungsgemäßen Verfahrens werden die Entfernungen zwischen der Mobilstation und den jeweiligen Basisstationen mit verschiedenen Werten für die Grunddämpfung des Ausbreitungsmodells geschätzt und wird für jeden Wert der Grunddämpfung die Position der Mobilstation bestimmt und gespeichert. Es werden für jeden Wert der Grunddämpfung die Abweichungen der geschätzten Positionen von den geschätzten Entfernungen ermittelt. Es wird diejenige Position ausgewählt, die mit der geringsten Summe der Abweichungen bestimmt wurde. Die geschätzten Entfernungen können gefiltert sein. Die Filterung kann beispielsweise darin bestehen, dass die vorhergehenden geschätzten Entfernungen zwischen der Mobilstation und einer Basisstation für einen bestimmten Wert der Grunddämpfung gemittelt werden. Aufgrund dieser Vorgehensweise kann die Position der Mobilstation genau ermittelt werden, da der Positionsbestimmung die Entfernungen zugrunde gelegt werden, die mit einem für die Umgebung der Mobilstation geeigneten Wert der Grunddämpfung geschätzt wurden.

In den Rahmen der Erfindung fällt auch ein Mobilfunknetz mit mindestens einer Mobilstation und mit mehreren Basisstationen und mindestens einer Basisstationssteuerung zur Durchführung des erfindungsgemäßen Verfahrens. In einem solchen Mobilfunknetz kann die Position der Mobilstation genauer bestimmt werden als in Mobilfunknetzen, in denen die Entfernungen mit starren Ausbreitungsmodellen bzw. ohne Filterung geschätzt wird.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert. Es zeigt:

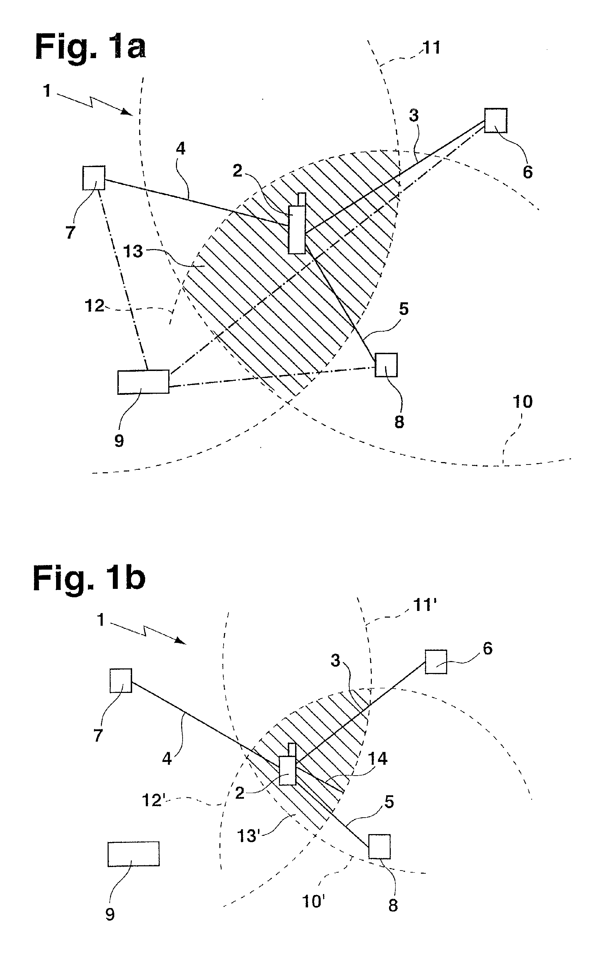

Fig. 1a	die schematische Anordnung eines Mobilfunknetzes und eine Positionsbestimmung einer Mobilstation vor der Anpassung der Grunddämpfung; und

Fig. 1b	die schematische Anordnung eines Mobilfunknetzes und eine Positionsbestimmung einer Mobilstation nach der Anpassung der Grunddämpfung.

In der Fig. 1a ist ein Teil eines Mobilfunknetzes 1 schematisch dargestellt. Eine Mobilstation 2 unterhält gleichzeitig oder nacheinander eine Funkverbindung 3

- 5 zu Basisstationen **6 - 8.** Für jede Basisstation 6 - 8 wird an der Mobilstation 2 die Feldstärke der von jeder Basisstation 6 - 8 gesendeten Funksignale gemessen. Die gemessenen Feldstärken werden an eine Basisstationssteuerung 9 übermittelt, in der aufgrund eines Ausbreitungsmodells mit vorgegebenen Ausbreitungs- und Grunddämpfungswerten die Entfernung zwischen der Mobilstation 2 und der jeweiligen Basisstation 6 - 8 geschätzt wird.

Die Position der Mobilstation 2 wird durch eine Trilateration bestimmt. Im dargestellten Beispiel wird um jede Basisstation 6 - 8 ein Kreisbogen **10 - 12** gelegt, dessen Radius der jeweils geschätzten Entfernung entspricht. Der schraffierte Bereich **13** bestimmt den Aufenthaltsort der Mobilstation 2.

In der **Fig. 1b** ist das Mobilfunknetz 1 der Fig. 1a dargestellt. In diesem Fall wurde die Entfernung zwischen der Mobilstation 2 und jeder Basisstation 6 - 8 mit einem angepassten Grunddämpfungswert des Ausbreitungsmodells geschätzt. Der Grunddämpfungswert wurde aufgrund eines Vergleichs der aktuell geschätzten Entfernungen mit vorhergehenden Entfernungsschätzungen angepasst. Mit dem angepassten Grunddämpfungsfaktor kann die Entfernung zwischen der Mobilstation 2 und den Basisstationen 6 - 8 genauer geschätzt werden. Die Kreisbögen **10' - 12'** weisen hier einen geringeren Radius auf als die Kreisbögen 10 - 12 in Fig. 1a. Die Position der Mobilstation 2 liegt im schraffierten Bereich **13',** der kleiner ist, als der Bereich 13 der Fig. 1a. Die Position der Mobilstation 2 wird in der Fig. 1b daher genauer bestimmt. Mit der Bezugsziffer 14 ist die Abweichung, d.h. der kürzeste Abstand zwischen der geschätzten Position der Mobilstation 2 und der geschätzten Entfernung 11', bezeichnet.

**Patentansprüche**

1. Verfahren zur Positionsschätzung einer Mobilstation (2) in einem Mobilfunknetz (1) auf der Basis von Ausbreitungsmodellen, bei dem an der Mobilstation (2) die Feldstärke von mehreren mit der Mobilstation (2) in Verbindung stehenden Basisstationen (6 - 8) gemessen wird, die Entfernung zwischen der Mobilstation (2) und jeder der mit der Mobilstation (2) in Verbindung stehenden Basisstationen (6 - 8) aufgrund eines Ausbreitungsmodells geschätzt und die geschätzten Entfernungen gespeichert werden, **dadurch gekennzeichnet, dass** eine Filterung der geschätzten Entfernungen und eine Schätzung der Position der Mobilstation (2) aufgrund der gefilterten geschätzten Entfernungen erfolgt.

2. Verfahren nach Anspruch 1, **dadurch gekennzeichnet, dass** die geschätzten Entfernungen derart gefiltert werden, dass für jede Mobilstation-Basisstation-Verbindung zunächst die Abweichung der aktuellen geschätzten Entfernung zu der zuletzt geschätzten Entfernung bestimmt wird, eine maximale Abweichung definiert wird und die Positionsbestimmung mit aktuellen geschätzten Entfernungen erfolgt, für die die Abweichung geringer oder gleich der maximalen Abweichung ist.

3. Verfahren nach Anspruch 1, **dadurch gekennzeichnet, dass** die geschätzten Entfernungen derart gefiltert werden, dass für jede Mobilstation-Basisstation-Verbindung die geschätzten Entfernungen aus mehreren vorhergehenden Messungen gemittelt werden, die Abweichung der aktuellen geschätzten Entfernung zu der gemittelten geschätzten Entfernung bestimmt wird, eine maximale Abweichung definiert wird und die Positionsbestimmung mit aktuellen geschätzten Entfernungen erfolgt, für die die Abweichung geringer oder gleich der maximalen Abweichung ist.

4. Verfahren nach Anspruch 1 oder 3, **dadurch gekennzeichnet, dass** die geschätzten Entfernungen vorhergehender Messungen zeitlich gewichtet werden.

5. Verfahren nach Anspruch 1, **dadurch gekennzeichnet, dass** eine geschätzte Position, die außerhalb einer aktuellen Zelle liegt, korrigiert wird, indem die geschätzte Position in den Bereich der Zelle verlegt wird.

6. Verfahren nach Anspruch 1, **dadurch gekennzeichnet, dass** die Abweichungen (14) der gefilterten geschätzten Entfernungen zur geschätzten Position bestimmt werden und dass aufgrund dieser Abweichungen die Grunddämpfung im Ausbreitungsmodell angepasst wird.

7. Verfahren nach Anspruch 6, **dadurch gekennzeichnet, dass** die Grunddämpfung adaptiv angepasst wird.

8. Verfahren nach dem Oberbegriff von Anspruch 1, **dadurch gekennzeichnet, dass** die Entfernungen zwischen der Mobilstation (2) und den jeweiligen Basisstationen (6 - 8) mit verschiedenen Werten für die Grunddämpfung des Ausbreitungsmodells geschätzt werden und für jeden Wert der Grunddämpfung die Position der Mobilstation bestimmt und gespeichert wird, dass für jeden Wert der Grunddämpfung die Abweichungen (14) der geschätzten Positionen von den geschätzten Entfernungen ermittelt werden, und dass diejenige Position ausgewählt wird, die mit der geringsten Summe der Abweichungen bestimmt wurde.

9. Mobilfunknetz (1) mit mindestens einer Mobilstation (2) und mit mehreren Basisstationen (6 - 8) zur Durchführung des Verfahrens nach Anspruch 1 oder 8.

**Fig. 1a**

**Fig. 1b**

**Europäisches Patentamt**

# EUROPÄISCHER RECHERCHENBERICHT

Nummer der Anmeldung

EP 02 36 0308

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 732 354 A (MACDONALD ALAN DENIS) 24. März 1998 (1998-03-24) | 1,8,9 | H04Q7/38 |
| Y | * Zusammenfassung * <br> * Spalte 3, Zeile 3 - Zeile 49 * <br> * Spalte 4, Zeile 16 - Zeile 60 * <br> * Spalte 6, Zeile 24 - Spalte 9, Zeile 20 * <br> * Abbildungen 1,7,8 * <br> --- | 2-7 | |
| Y | EP 1 111 403 A (HITACHI LTD) 27. Juni 2001 (2001-06-27) <br> * Zusammenfassung * <br> * Spalte 2, Zeile 3 - Zeile 13 * <br> * Spalte 2, Zeile 43 - Zeile 48 * <br> * Spalte 3, Zeile 42 - Spalte 4, Zeile 12 * <br> * Abbildungen 4,5 * <br> --- | 2-7 | |
| X | PENT M ET AL: "Method for positioning GSM mobile stations using absolute time delay measurements" <br> ELECTRONICS LETTERS, IEE STEVENAGE, GB, <br> Bd. 33, Nr. 24, <br> 20. November 1997 (1997-11-20), Seiten 2019-2020, XP006008213 <br> ISSN: 0013-5194 | 1,9 | RECHERCHIERTE SACHGEBIETE (Int.Cl.7) <br><br> H04Q |
| A | * das ganze Dokument * <br> --- | 2-8 | |
| A | EP 1 030 531 A (LUCENT TECHNOLOGIES INC) 23. August 2000 (2000-08-23) <br> * Zusammenfassung * <br> * Seite 2, Zeile 54 - Seite 3, Zeile 24 * <br> * Seite 4, Zeile 20 - Zeile 30 * <br> * Abbildungen 5-7 * <br> --- <br> -/-- | 1-9 | |

Der vorliegende Recherchenbericht wurde für alle Patentansprüche erstellt

| Recherchenort | Abschlußdatum der Recherche | Prüfer |
|---|---|---|
| MÜNCHEN | 23. Dezember 2002 | Rabe, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

EP 1 315 393 A1

**Europäisches Patentamt**

**EUROPÄISCHER RECHERCHENBERICHT**

Nummer der Anmeldung

EP 02 36 0308

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 6 040 800 A (MOLNAR KARL ET AL) 21. März 2000 (2000-03-21) * Zusammenfassung * * Spalte 8, Zeile 22 - Zeile 52 * * Abbildung 7 * ----- | 1,8,9 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| MÜNCHEN | 23. Dezember 2002 | Rabe, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

7

**ANHANG ZUM EUROPÄISCHEN RECHERCHENBERICHT
ÜBER DIE EUROPÄISCHE PATENTANMELDUNG NR.**          EP 02 36 0308

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-12-2002

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US 5732354 | A | | 24-03-1998 | US | 5724660 | A | 03-03-1998 |
| EP 1111403 | A | | 27-06-2001 | JP | 2001174537 | A | 29-06-2001 |
| | | | | EP | 1111403 | A2 | 27-06-2001 |
| EP 1030531 | A | | 23-08-2000 | AU | 1527800 | A | 24-08-2000 |
| | | | | BR | 0000341 | A | 19-12-2000 |
| | | | | EP | 1030531 | A1 | 23-08-2000 |
| | | | | JP | 2000244968 | A | 08-09-2000 |
| US 6040800 | A | | 21-03-2000 | AU | 742151 | B2 | 20-12-2001 |
| | | | | AU | 6954898 | A | 13-11-1998 |
| | | | | BR | 9808954 | A | 01-08-2000 |
| | | | | CN | 1261436 | T | 26-07-2000 |
| | | | | EP | 0977999 | A2 | 09-02-2000 |
| | | | | JP | 2001523337 | T | 20-11-2001 |
| | | | | NZ | 500344 | A | 30-11-2001 |
| | | | | TW | 456121 | B | 21-09-2001 |
| | | | | WO | 9848578 | A2 | 29-10-1998 |
| | | | | US | 6266534 | B1 | 24-07-2001 |

EPO FORM P0461

Für nähere Einzelheiten zu diesem Anhang : siehe Amtsblatt des Europäischen Patentamts, Nr.12/82